# EUROPÄISCHE PATENTANMELDUNG

(11) **EP 3 006 801 A2**
(43) Veröffentlichungstag der Anmeldung: **13.04.2016**
(21) Anmeldenummer: 15002890.0
(22) Anmeldetag: 09.10.2015
(51) Int. Cl.: F16L 11/08, E21B 23/00

(54) **FLEXIBLES ROHR DES "COILED-TUBING"-TYPS UND VERFAHREN ZUR HERSTELLUNG DESSELBEN**

(30) Priorität: 10.10.2014 DE 102014014795
(71) Anmelder: Führer, Werner, 39108 Magdeburg (DE); Haberkamp, Werner, 6022 Großwangen (CH)
(72) Erfinder: Führer, Werner, 39108 Magdeburg (DE); Haberkamp, Werner, 6022 Großwangen (CH)
(74) Vertreter: Neuhäuser, Uwe

(57) **Zusammenfassung**

Vorgeschlagen wird u.a. ein Flexibles Rohr (1) des "Coiled-Tubing"-Typs, mit einem Rohrinnenteil (2) und einem Rohraußenteil in Form einer das Rohrinnenteil (2) ummantelnden Armierung (3.1, 3.2), wobei die Armierung (3.1, 3.2) aus zumindest einer Verseillage zweier Gruppen Ober den Umfang des Rohrinnenteils (2) alternierend angeordneter Verseildrähte unterschiedlichen Querschnitts mit zueinander formkomplementär ausgebildeten Kontaktflächen (8, 9; 19, 20) aufgebaut ist, wobei das Rohrinnentell (2) ein radial innenliegendes Rohr (4) und wenigstens einen auf die Außenmantelfläche (5) besagten Rohres (4) aufgebrachten elektrischen Leiter (6) undfoder Signalleiter sowie einen das Rohr (4) samt des wenigstens einen elektrischen Leiters (6) und/oder Signafleiters abdeckenden Mantel (7) aufweist,, und wobei das Rohrinnenteil (2) mit der Armierung (3.1, 3.2) durch Stoff-, Form- und/oder Kraftschluss axial fest verbunden ist.

## Beschreibung

Die Erfindung betrifft ein flexibles Rohr des "Coiled-Tubing"-Typs gemäß der Merkmalskombination des Patentanspruchs 1 der Erfindung. Gemäß Anspruch 13 der Erfindung betrifft dieselbe ferner ein Verfahren zur Herstellung eines derartigen flexiblen Rohres.

Angesichts der weltweit wachsenden Energienachfrage ist man mit der Besorgnis über die zukünftige Energieversorgung und den Zugang zu neuen Energiequellen sowie mit steigenden Kosten bei der Exploration und der Erschließung neuer Vorkommen konfrontiert. Wie die Internationale Energieagentur (EA) berichtet, sollte die weltwelte Energienachfrage bis 2030 um etwa 50% über das derzeitige Niveau ansteigen. Dies ist weitgehend dem raschen Wachstum der Wirtschaften der Schwellenländer, insbesondere in den BRIC-Ländern und im Nahen Osten, zuzuschreiben. Da die Weltwirtschaft derzeit noch massiv von nicht emeuerbaren Energiequellen wie Erdöl und Erdgas abhängig ist, stellt sich die Frage, wie und zu welchen Kosten das Nachfragewachstum in Zukunft durch das Angebot gedeckt werden kann. Zudem wird es immer teurer, neue Öl- und Gasvorkommen zur Förderreife zu bringen, was in den vergangenen Jahren zu einem kräftigen Anstieg der Explorations- und Erschliessungskosten im Öl- und Gasgeschäft geführt hat. Aus diesem Grund wird die effiziente Förderung der vorhandenen Vorkommen zu einem besonderen Schwerpunkt bei der Sicherung der zukünftigen Energieversorgung.
Die Energieunternehmen stehen unter enormen Druck, ihre Öl- und Gasvorkommen auf effizienteste Weise zu explorieren, zu erschliessen und zu fördern. Um unter der Bedingung der stetigen Zunahme des Anteils komplexer Lagerstätten und schwer zu fördernder Vorkommen an den Gesamtvorkommen, der immer rascheren Abnahme der Basisproduktion bei schon weitgehend ausgebeuteten Vorkommen sowie des hohen erforderlichen Kapitaleinsatzes bei neuen Projekten die Produktivität ihrer Öl- und Gasquellen zu erhöhen, setzen die Energieunternehmen zunehmend innovative Techniken, wie Hydraulic Fracturing und Side-Tracking ein, wozu auch Remedial Cementing und Coiled-Tubing gehören.

Kohlenwasserstoffe findet man gewöhnlich in porösem, durchlässigen Gestein. Mit dem Fracturing-Verfahren soll die Durchlässigkeit des Gesteins erhöht werden, um damit den Fluss der Kohlenwasserstoffe in ein Förderloch anzuregen. Hierbei setzt die Fracturing-Flotte hochspezialisierte Vorrichtungen ein, um verschiedene Flüssigkeitsgemische und Stützmittel (Proppant) unter sehr hohem Druck in ein Bohrloch zu pumpen. Damit sollen Risse in den Förderbereichen aufgebrochen und besagte Risse danach durch den Einsatz der Stützmittel offen gehalten werden, um die Kohlenwasserstoffe ungehindert in ein Bohrloch strömen zu lassen. Bei dem Nachlassen des Druckes schliessen sich Bruchstellen oft wieder. Das Stützmittel hält sie jedoch offen und die Kohlenwasserstoffe fließen leichter durch das Stützmittel als durch das massive Gestein. Mit dieser Technologie können die Fließgeschwindigkeiten in den Bohrlöchern stark erhöht und es kann die Wirtschaftlichkeit der Förderung der Kohlenwasserstoffe verbessert werden. Ein typischer Hydraulic-Fracturing-Einsatz umfasst vier verschiedene Phasen: Aufbrechen, Stabilisierung, Spülung und Schliessung.

Bei dem Side-Tracking handelt es sich um eine sogenannte "Reparaturbohrung", mit der, ausgehend von einem bestehenden Bohrloch, ein neues Bohrloch geschaffen wird, um entweder einen irreparablen Schaden am Bohrloch oder an der Bohrlochausrüstung zu umgehen oder weitere Bereiche eines Vorkommens zu erreichen. Dieses Bohrverfahren ermöglicht es, neue Öl- und Gasreservoirs über den oberen Teil bereits bestehenden Bohrlöcher zu erreichen, Bereits erschöpfte oder nicht mehr nutzbare Bohrlöcher können durch Site-Tracking zur Erschliessung neuer Quellen genutzt werden.

Remedial-Cementing-Verfahren dienen der Ummantelung des Bohrloches, der Isolierung von Förderzonen gegenüber anderen Wasser führenden Erd- oder Gesteinsschichten oder dem Verschliessen von Abzweigungen innerhalb des Bohrloches. Hierzu werden mit Hilfe von Zement Fördergerüste innerhalb des Bohrloches errichtet bzw. zementiert. Diese Leistungen werden in Verbindung mit Hydraulic-Fracturing erbracht.

Als Coiled-Tubing bezeichnet man ein durchgehendes, für hohen Druck geeignetes Stahlrohr mit geringem Durchmesser von etwa 25,4 bis etwa 101,6 mm, welches Stahlrohr im Wesentlichen unflexibel, jedoch in Grenzen biegsam respektive plastisch verformbar ist. Diese Rohre sind in verschiedenen Längen von bis zu mehreren tausend Metern erhältlich und werden auf Trommeln respektive Wickelspulen aufgewickelt zur bestimmungsgemäßen Verwendung bereitgestellt, Im Onshore-Betrieb sind besagte Wickelspulen auf einem Lastwagen oder Anhänger und im Offshore-Betrieb auf insbesondere einer Bohrplattform, einem Schiff oder ähnlichem positioniert. Beim Einsatz von Coiled-Tubing wird beispielsweise das Rohr oft gegen den Bohnochdruck - in ein Öl- oder Gasbohrloch eingebracht, um im Bohrloch eine sogenannte Schlamm-Zirkulation zu erzeugen. Nach der Installation wird Coiled-Tubing gemeinsam mit entsprechenden Zusatzausrüstungen verwendet, um Fluide, wie Säuren oder andere Substanzen, zu Stimulationszwecken in das Bohrloch zu pumpen. Des Weiteren wird Coiled-Tubing auch für die oben beschriebenen Einsätze benutzt. Am Ende der Coiled-Tubing können auch Messinstrumente angebracht sein. Die Signalisierung erfolgt heute fast ausschliesslich über Druckschwankungen der Spülflüssigkeiten oder aber es muss ein Mess- und Energiekabel mitgeführt werden, was aber bei vielen Einsätzen technisch große Probleme bereitet.

So beschreibt die US 3 841 407 A eine Vorrichtung und ein Verfahren zum Verbringen eines im Wesentlichen unflexiblen Rohres des "Coiled-Tubing"-Typs in ein Bohrloch, wobei das Rohr von einer Wickelspule abgewickelt, nachfolgend gerichtet und mittels einer Vorschubeinheit in besagtes Bohrloch verbracht wird. Das Rohr soll aus einem Stahl, einem rostfreiem Stahl, einem anderen Metall oder einem im Wesentlichen starren Kunststoffmaterial bestehen. Das Rohr dient im Wesentlichen dem Einbringen eines flüssigen, gasförmigen oder dampfförmigen Fluids in das Bohrloch. Die US 5 291 956 A beschreibt ein auf einer Wickelspule aufgewickeltes Rohr des "Coiled-Tubing"-Typs, welches in ein Bohrloch verbracht werden soll. Um das Rohr auf besagte Wickelspule aufwickeln zu können, weist das Rohr relativ dünne Rohrwandungen auf. Diese dünnen Rohrwandungen begrenzen den Differenzdruck, etwaige Bohr- und Rotationsbelastungen sowie das hängende Gewicht. Des Weiteren werden in dieser Druckschrift Probleme mit der Restbiegung des abgewickelten, gerichteten und in das Bohrloch verbrachten Rohres gesehen, da besagte Restkrümmung zu Richtungsabweichungen während des Bohrens führen können. Um dem Problem besagter Restbiegung zu begegnen, wird vorgeschlagen, mittels einer Strahl-Bohrwerkzeugs das Rohr unter hohen Druck zu setzen. Überdies wird mit dieser Druckschrift auch ein Rohr-in-Rohr-System mit einem flexiblen, drucklosen Außenrohr und einem mittels Druck aufweitbaren Innenrohr vorgeschlagen. Die US 6 015 015 A beschreibt ein doppelwandiges Rohr des "Coiled-Tubing"-Typs, welches aus einem Innenrohr und einem Außenrohr gebildet ist. Innen- und Außenrohr sind mittels Zentriereinrichtungen konzentrisch zueinander angeordnet. In dem gebildeten Ringraum ist Isolationsmaterial angeordnet.

Hiervon ausgehend ist es Aufgabe der Erfindung, ein im Hinblick auf den Stand der Technik alternatives Rohr des "Colied-Tubing"-Typs zu schaffen, welches gemäß einem ersten Aspekt der Erfindung bei hoher erforderlicher Steifigkeit, insbesondere Axialsteifigkeit, dennoch ausreichend flexibel respektive biegsam ist, um insbesondere auch in horizontal verlaufende Bohrlöcher oder in Bohrlöchern mit geringer Neigung eingeführt werden zu können. Gemäß einem zweiten Aspekt der Erfindung soll das Rohr des "Coiled-Tubing"-Typs hohe Druck- und Zugkräfte sowie ohne jedwede Verformung Differenzdrücke, insbesondere hohe Innendrücke aufnehmen können. Gemäß einem dritten Aspekt der Erfindung soll das Rohr des "Coiled-Tubing"-Typs bei tiefen Bohrlöchern, insbesondere auch im Offshor-Bereich, den Durchtritt von insbesondere Fluiden durch seine Außenhülle zuverlässig verhindern. Gemäß einem vierten Aspekt der Erfindung soll sich das Rohr des "Coiled-Tubing"-Typs einfach und kostengünstig herstellen lassen sowie in großen Langen auf Wickelspulen zur bestimmungsgemäßen Verwendung bereitstellbar sein. Aufgabe der Erfindung ist es ferner, ein einfaches und kostengünstiges Verfahren zur Herstellung eines derartigen Rohres des "Coiled-Tubing"-Typs anzugeben.

Gelöst wird die gestellte Aufgabe durch ein flexibles Rohr des "Coiled-Tubing"-Typs, mit einem Rohrinnenteil und einem Rohraußenteil in Form einer das Rohrinnenteil ummantelnden Armierung, wobei die Armierung aus zumindest einer Verseillage zweier Gruppen über den Umfang des Rohrinnenteils alternierend angeordneter Verseildrähte unterschiedlichen Querschnitts mit zueinander formkomplementär ausgebildeten Kontaktflächen aufgebaut ist, wobei das Rohrinnenteil ein radial innenliegendes Rohr und wenigstens einen auf die Außenmantelfläche besagten Rohres aufgebrachten elektrischen Leiter und/oder Signalleiter sowie einen das Rohr samt des wenigstens einen elektrischen Leiters und/oder Signalleiters abdeckenden Mantel aufweist, und wobei das Rohrinnenteil mit der Armierung durch Stoff-, Form- und/oder Kraftschluss axial fest verbunden ist.

Es ist ein Rohr der gattungsgemäßen Art geschaffen, welches bei hoher Steifigkeit, insbesondere hoher axialer Steifigkeit dennoch ausreichend flexibel respektive biegsam ist sowie eine hohe Fluiddichtigkeit in Querrichtung des Rohres aufweist. Durch den besagten Stoff-, Form- und/oder Kraftschluss zwischen der Armierung und dem Rohrinnenteil ist vorteilhaft eine axiale Relativbewegung zwischen der Armierung des Kabels und dem Rohrinnenteil verhindert, wodurch Zug- und Druckkräfte während des bestimmungsgemäßen Gebrauchs des besagten Rohres störungsfrei aufgenommen und übertragen werden können. Insbesondere bei derartigen Rohren zu geophysikalischen Mess-, Erkundungs- und/oder Fluidführungszwecken sind aufgrund der tiefen Bohrungen unterschiedliche Längungen der Materialien der Armierung und des Rohrinnenteils zu erwarten, welche zu axialen Relativbewegungen und in der Folge zur Schädigung des Fügeverbundes des Rohres und/oder zu Funktionsstörungen oder gar zum Bruch des Rohres führen können. Um derartigen Relativbewegung vorsorglich zu begegnen, ist das Rohrinnenteil vorteilhaft mit der Armierung durch Stoff-, Form- und/oder Kraftschluss axial fest verbunden. Durch die Ausbildung der Armierung aus Verseildrähten, nämlich aus Runddrähten und Profildrähten der beschriebenen Art bzw. ausschließlich Profildrähten, lässt dieses besonders ausgebildete Rohr des "Coiled-Tubing"-Typs kleinere Wickelspulendurchmesser zu als herkömmliche Rohre des "Coiled-Tubing"-Typs, welche im Wesentlichen durch unflexible Stahlrohre gebildet sind. Überdies lässt sich ein derartiges Rohr in großen bzw. sehr großen Längen produzieren und letztlich auch komfortabler handhaben. Ein weiterer Vorteil ist, dass durch den Seilcharakter dieses besonders ausgebildeten Rohres des "Coiled-Tubing"-Typs die Belastung durch dauerhafte Verformung, die bis an die plastische Grenze geht, beim Aus- und Einbringen in das Bohrloch geringer ist als bei den herkömmlich verwendeten Stahlrohren. Daraus resultiert vorteilhaft eine erhöhte Lebensdauer respektive Standzeit des erfindungsgemäßen Rohres des "Coiled-Tubing"-Typs, die um ein Mehrfaches höher ist, als bei herkömmlichen Rohren des "Coiled-Tubing"-Typs.

Die Unteransprüche beschreiben bevorzugte Weiterbildungen oder Ausgestaltungen der Erfindung.

Danach sind das Rohr des Rohrinnenteils und der Mantel jeweils aus einem synthetischen Polymer gebildet, welches sich einfach und kostengünstig verarbeiten lässt. Das synthetische Polymer ist bevorzugt ein ETFE (ETFE = Ethylen-Tetrafluorethylen). ETFE verbindet vorteilhaft eine hohe Temperaturbeständigkeit (bis 150°C) mit einer guten Beständigkeit gegen aggressive Medien, wie beispielsweise Säuren, aromatische Kohlenwasserstoffe etc. Ferner weist ETFE vorteilhaft ein geringes Gewicht auf und ist besonders vorteilhaft als elektrischer Isolator einsetzbar. Überdies lässt dieses Polymer hohe Innendrücke bis zu 1800 bar (25.000 psi) zu. Derartige Drücke sind insbesondere zu verzeichnen, wenn Fluide in das Bohrloch gepresst werden sollen. Bedingt durch die glatte und resistente Ausbildung der Innenwände des Rohres des Rohrinnenteils verringert sich der Reibungswiderstand, wodurch Ablagerungen an den Innenwänden vermieden, zumindest jedoch maßgeblich gemindert sind. Dieses wirkt sich wiederum vorteilhaft auf die Lebensdauer des erfindungsgemäßen Rohres des "Coiled-Tubing"-Typs aus.

Wie die Erfindung weiter vorsieht, ist der wenigstens eine elektrische Leiter und/oder Signalleiter bevorzugt durch ein einfach zu verarbeitendes bandförmiges oder schlauchförmiges Metallnetz oder durch eine bandförmige oder schlauchförmige Metallfolie oder durch ein langgestrecktes, metallenes Drahtelement gebildet, welches seinerseits gegebenenfalls wendelförmig auf die Außenmantelfläche des Rohres des Rohrinnenteils aufgebracht ist. Das Metallnetz, Metallband oder Drahtelement bestehen dabei z. B. aus einem Kupfer oder einer Kupferlegierung.

Gemäß einer ersten bevorzugten Ausführungsvariante der Erfindung ist vorgesehen, dass die Verseildrähte beider Gruppen jeweils einen bogenförmigen Profilquerschnitt aufweisen, der auf die Grundgeometrie eines Sektorprofils eines Kreisringes zurückgeführt ist, wobei die eine Gruppe Verseildrähte durch erste Profildrähte gebildet ist, welche ersten Profildrähte beidseitig des Sektorprofils im Bereich ihrer Kontaktflächen jeweils wenigstens einen sich längs des Profildrahtes erstreckenden Längssteg aufweisen, wogegen die andere Gruppe Verseildrähte durch zweite Profildrähte gebildet ist, welche zweiten Profildrähte im Bereich ihrer Kontaktflächen jeweils zu besagten Längsstegen der unmittelbar benachbarten ersten Profildrähte korrespondierende und je einen Längssteg formschlüssig aufnehmende Längsnuten aufweisen. Durch diese Maßnahme ist ein besonders wirkungsvoller Formschluss zwischen den Profildrähten der Armierung bewirkt. Ein derartiges Rohr des "Coiled-Tubing"-Typs weist bei Gewährleistung der Aufnahme hoher Druck- und Zugkräfte eine hohe Querstabilität respektive Festigkeit in radialer Richtung auf. Eine Auflösung der Verseillage infolge insbesondere erhöhten Innendruckes ist wirkungsvoll verhindert.

Gemäß einer zweiten vorteilhaften Ausführungsvariante der Erfindung ist eine Gruppe Verseildrähte der Armierung durch Runddrähte gebildet, wogegen die andere Gruppe Verseildrähte durch Profildrähte gebildet ist, welche Profildrähte einen bogenförmigen Profilquerschnitt aufweisen, der auf die Grundgeometrie eines Sektorprofils eines Kreisringes zurückgeführt ist, und wobei die Kontaktflächen der Profildrähte formkomplementär zu den Kontaktflächen der benachbarten Runddrähte konkav ausgebildet sind. Ein derartiges Rohr des "Coiled-Tubing"-Typs kann hohe Druck- und Zugkräfte übertragen und weist eine hohe Querstabilität respektive Festigkeit in radialer Richtung auf, wodurch der Erhalt des Lagenverbundes auch in großen Tiefen mit hohen Drücken gewährleistet ist. Gegenüber der ersten, bevorzugten Ausführungsvariante ist dieses Rohr biegeweicher.

Wie die Erfindung noch vorsieht, bestehen die Runddrähte und Profildrähte der zumindest einen Verseillage jeweils aus einem Stahl, wobei die Runddrähte vorteilhaft mit Rückdrehung und die Profildrähte rückdrehungsfrei verseilt sind. Des Weiteren sind die Profildrähte, vermittels an sich bekannter Vorformungseinrichtungen vorab eine Vorformung erfahrend, spannungsfrei in den Verseilverband gelegt. Durch diese Maßnahme ist ein qualitätsgerechter Lagenaufbau des die Armierung ausbildenden Verseilverbandes, insbesondere ein dichter Verbund der Verseildrähte in der Verseillage gewährleistet.

Wie bereits oben ausgeführt, ist zur Vermeidung einer axialen Relativbewegung zwischen dem Rohrinnenteil und der Armierung während des bestimmungsgemäßen Gebrauchs des besagten Rohres des "Coiled-Tubing"-Typs, insbesondere zu geophysikalischen Mess-, Erkundungs- und/oder Fluidführungszwecken in langen Bohrlöchern, das Rohrinnenteil mit der Armierung durch Stoff-, Form- und/oder Kraftschluss axial fest verbunden. Der Stoffschluss wird dabei bevorzugt mittels eines Klebstoffes bewirkt, der seinerseits weiter bevorzugt auf das Rohrinnenteil aufgebracht wird und nach dem Ummanteln des Rohrinnenteils mit der Armierung respektive nach dem Aufseilen der Verseildrähte auf das Rohrinnenteil abbindet bzw. aushärtet. Dabei fungiert der Klebstoff in vorteilhafter Weise gleichzeitig als Abdichtmittel, indem es etwaige noch vorhandene Hohlräume zwischen den Verseildrähten der Armierung und zwischen den Verseildrähten und dem Rohrinnenteil ausfüllt, wodurch eine besonders hohe Fluiddichtheit des Rohres des "Coiled-Tubing"-Typs gewährleistet ist.

Was den besagten Form- und/oder. Kraftschluss zwischen der Armierung und dem Rohrinnenteil anbelangt, ist dieser mittels wenigstens einer Erhebung bewirkt, welche Erhebung an einer zum Rohrinnenteil weisenden Kontaktfläche zumindest eines Profildrahtes ausgebildet ist und nach radial innen gerichtet in die Oberfläche des Rohrinnenteils formschlüssig eindringt, zumindest jedoch gegen die Oberfläche des Rohrinnenteils gepresst wird/ist. Die Erhebung kann sich dabei längs des Profildrahtes erstrecken, wodurch sich diese wendelförmig um das Rohrinnenteil schlingt und so eine axiale Relativbewegung zwischen der Armierung und dem Rohrinnentell verhindert, zumindest jedoch wirkungsvoll behindert. Alternativ kann die wenigstens eine Erhebung sich auch quer zur Längserstreckung des Profildrahtes erstrecken. Sind mehrere derartige Erhebungen vorgesehen, ist beispielsweise eine Kontaktfläche mit dem Rohrinnenteil gebildet, welche nach Art einer Zahnstange zumindest abschnittsweise abwechselnd Erhebungen respektive Zähne und Zahnlücken aufweist, welche Zähne in die Oberfläche des Rohrinnenteils formschlüssig eindringen, zumindest jedoch gegen die Oberfläche gepresst werden und so besagte axiale Relativbewegung verhindern, zumindest jedoch wirkungsvoll behindern. Wie bereits oben erwähnt, bestehen die Verseildrähte aus einem Stahl, der seinerseits geeignet ist, hohen und höchsten auf das Rohr des "Coiled-Tubing"-Typs einwirkenden Kräften zu widerstehen, beispielsweise bei Verwendung desselben für geophysikalische Mess-, Erkundungs- und Fluidführungszwecke, insbesondere in der Erdöl- und Erdgasförderindustrie. Im Hinblick darauf wird besagte wenigstens eine Erhebung bevorzugt bereits bei der Herstellung des zumindest einen Profildrahtes nach einem Walzverfahren ausgebildet.

Ein Verfahren zur Herstellung des vorstehend näher beschriebenen Rohres des "Coiled-Tubing"-Typs zeichnet sich durch folgende Schritte aus:
a) Bereitstellung zumindest eines langgestreckten Rohres aus einem synthetischen Polymer zur Ausbildung eines Rohrinnenteils,
b) Aufbringen wenigstens eines elektrischen Leiters und/oder Signalleiters auf die Außenmantelfläche des Rohres des Rohrinnenteils, wobei der wenigstens eine elektrische Leiter und/oder Signalleiter durch ein bandförmiges öder schlauchförmiges Metallnetz und/oder durch eine bandförmige oder schlauchförmige Metallfolie und/oder durch ein langgestrecktes, metallenes Drahtelement gebildet ist,
c) Abdecken des Rohres des Rohrinnenteils samt des wenigstens einen elektrischen Leiters und/oder Signalleiters mit einem Mantel aus einem extrudierfähigen Isoliermaterial mittels wenigstens eines Extruders, wobei das Isoliermaterial aus einem synthetischen Polymer besteht,
d) Überführung des gebildeten Rohrinnenteils in einen Verseilpunkt einer Verseilmaschine, und
e) im besagten Verseilpunkt Aufbringung einer Armierung aus zumindest einer Verseillage zweier Gruppen über den Umfang des Rohrinnenteils alternierend angeordneter Verseildrähte unterschiedlichen Querschnitts auf das Rohrinnenteil.

In Fortbildung des Verfahrens kann zwischen dem Schritt c) und dem Schritt d) ein Schritt ca) vorgesehen sein, der sich dadurch auszeichnet, dass auf den Mantel wenigstens ein weiterer elektrischer Leiter und/oder Signalleiter aufgebracht wird, wobei der wenigstens eine weitere elektrische Leiter und/oder Signalleiter durch ein bandförmiges oder schlauchförmiges Metallnetz und/oder durch eine bandförmige oder schlauchförmige Metallfolie und/oder durch ein langgestrecktes, metallenes Drahtelement gebildet ist. Hierdurch sind erweiterte Möglichkeiten der Übertragung von elektrischen Strom und/oder Signalen geschaffen.

Überdies kann zwischen dem Schritt d) und dem Schritt e) ein Schritt da) vorgesehen sein, der sich dadurch auszeichnet, dass vor Aufbringung der Armierung auf das Rohrinnenteil im besagten Verseilpunkt die Oberfläche des Rohrinnenteils derart mit einem Klebstoff benetzt wird, dass nach Aufbringung der Armierung nach Schritt e) etwaige zu verzeichnende Hohlräume sowohl zwischen den die Armierung bildenden Verseildrähten als auch zwischen der besagten Armierung und dem Rohrinnenteil vom Klebstoff eingenommen sind. Schließlich kann im Hinblick auf den Schritt e) vorgesehen sein, dass zwischen der Armierung und dem Rohrinnenteil ein Formschfuss bewirkt wird, indem an einer zum Rohrinnenteil weisenden Kontaktfläche mit dem Rohrinnenteil zumindest eines als Profildraht ausgebildeten Verseildrahtes wenigstens eine nach radial innen gerichtete Erhebung ausgebildet ist, welche Erhebung in die Oberfläche des Rohrinnenteils formschlüssig eindringt, zumindest jedoch gegen die Oberfläche des Rohrinnenteils gepresst wird. Durch diese Maßnahmen sowohl einzeln als auch in Kombination wird wirkungsvoll eine axiale Relativbewegung zwischen dem Rohrinnenteil und der Armierung während des bestimmungsgemäßen Gebrauchs des Rohres des "Coiled-Tubing"-Typs insbesondere in langen Bohrlöchern verhindert.

Die Erfindung wird nachstehend anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: eine perspektivische Darstellung eines erfindungsgemäß ausgebildeten Rohres des "Coiled-Tubing"-Typs gemäß einer ersten, bevorzugten Ausgestaltungsvariante,
- Fig. 2: das Rohr des "Coiled-Tubing"-Typs nach Fig. 1 im Querschnitt gesehen,
- Fig. 3a - 3d: die Einzelheiten "Z₁" bis "Z₄" nach Fig. 2, mit einer detaillierten Darstellung der Profildrähte des Rohres des "Coiled-Tubing"-Typs in vier verschiedenen Ausführungsformen derselben,
- Fig. 4a, 4b: in Anlehnung an die erste Ausgestaltungsvariante der Erfindung ein erfindungsgemäß ausgebildetes Rohr des "Coiled-Tubing"-Typs im Querschnitt gesehen, mit zwei weiteren vorteilhaften Ausführungsformen der Profildrähte,
- Fig. 5: eine perspektivische Darstellung eines erfindungsgemäß ausgebildeten Rohres des "Coiled-Tubing"-Typs gemäß einer zweiten Ausgestaltungsvariante,
- Fig. 6: das Rohr des "Coiled-Tubing"-Typs nach Fig. 5 im Querschnitt gesehen, und
- Fig. 7: äußerst schematisch die Darstellung eines geeigneten Verfahrens zur Herstellung eines erfindungsgemäßen Rohres des "Coiled-Tubing"-Typs.

### Variante 1:

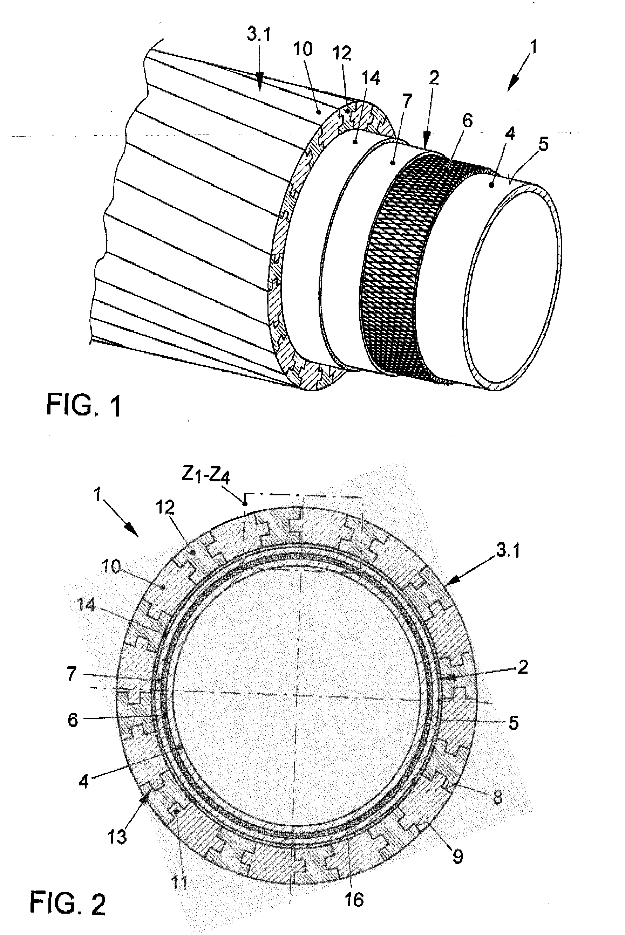

Die Fig. 1 und 2 zeigen eine erste Ausgestaltungsvariante eines erfindungsgemäß ausgebildeten Rohres 1 des "Coiled-Tubing"-Typs mit einem Rohrinnenteil 2, das seinerseits von einem Rohraußenteil in Form eines eine Armierung 3.1 ausbildenden Verseilverbandes ummantelt ist. Insbesondere die Armierung 3.1 bewirkt die axiale und radiale Stabilität respektive Steifigkeit des besagten Rohres 1 des "Coiled-Tubing"-Typs.

Der Rohrquerschnitt des Rohrinnenteils 2 ist durch ein radial innenliegendes, bevorzugt vorgefertigtes langgestrecktes Rohr 4 aus einem synthetischen Polymer gebildet. Ein derartiges Rohr 4 wird weiter bevorzugt nach einem an sich bekannten Extrusionsverfahren hergestellt.

Auf der Außenmantelfläche 5 besagten Rohres 4 des Rohrinnenteils 2 ist wenigstens ein elektrischer Leiter 6 und/oder Signalleiter (nicht zeichnerisch dargestellt) aufgebracht. Der wenigstens eine elektrische Leiter 6 und/oder Signalleiters ist auf die Außenmantelfläche 5 des Rohres 4 insbesondere aufgewickelt, aufgeflochten oder aufgezogen.

Vorliegend ist beispielgebend lediglich ein elektrischer Leiter 6 dargestellt, der ggf. gleichzeitig als Signalleiter fungiert. Der elektrische Leiter 6 ist als ein an sich bekanntes bandförmiges oder schlauchfiörmiges Metallnetz ausgebildet. Alternativ kann der elektrische Leiter 6 auch durch eine bandförmige oder schlauchförmige Metallfolie oder durch ein langgestrecktes, metallenes Drehtelement, beispielsweise durch einen Einzeldraht oder durch ein Drahtbündel gebildet sein (nicht zeichnerisch dargestellt). Der Draht oder das Drahtbündel können sich dabei achsparallel zum Rohr 4 des Rohrinnenteils 2 oder wendelförmig auf dessen Außenmantelfläche 5 erstrecken. Der elektrische Leiter 6 besteht bevorzugt aus Kupfer oder einer Kupferlegierung. Die Erfindung beschränkt sich jedoch nicht auf diesen Werkstoff, sondern erfasst jedweden an sich bekannten Werkstoff, der geeignet ist, elektrischen Strom und/oder Signale zu leiten. So kann ein nicht zeichnerisch dargestellter Signalleiter beispielsweise auch durch einen Lichtwellen-Leiter aus einem bevorzugt temperatur-hochbeständigen Fiberglas gebildet sein. Ferner können beispielsweise auch Carbonfasern als elektrische Leiter und/oder Signalleiter Anwendung finden.

Wie den Fig. 1 und 2 weiter zu entnehmen ist, ist das Rohr 4 samt des elektrischen Leiters 6 mittels eines Mantels. 7 aus einem synthetischen Polymer abgedeckt. Der Mantel 7 ist bevorzugt nach einem an sich bekannten Extrusionsverfahren derart aufgebracht, dass das der elektrische Leiter 6 in Form eines Metallnetzes in die Extrusionsmasse des Mantels 7 eingebettet wird. Der elektrische Leiter 6 fungiert hierbei sozusagen als Einlegeteil und bewirkt vorteilhaft eine Verstärkung des Rohrinnenteils 2. Bevorzugt bestehen das Rohr 4 und der Mantel 7 aus einem chemisch identischen oder weitestgehend identischen Material respektive synthetischen Polymer, so dass diese eine chemische Bindung eingehen und somit einen homogenen Materialverbund ausbilden.

Das synthetische Polymer sowohl zur Ausbildung des Rohres 4 als auch des Mantels 7 ist bevorzugt ein ETFE (ETFE = Ethylen-Tetrafluorethylen). ETFE verbindet vorteilhaft eine hohe Temperaturbeständigkeit (bis 150°C) mit einer guten Beständigkeit gegen aggressive Medien, wie beispielsweise Säuren, aromatische Kohlenwasserstoffe etc. Überdies weist ETFE vorteilhaft ein geringes Gewicht auf und ist besonders vorteilhaft als elektrischer Isolator ersetzbar Durch die Erfindung mit erfasst ist ein faserverstärktes, insbesondere glas- oder carbonfaserverstärktes Polymer, wodurch das Rohrinnenteil 2 eine weiter verbesserte Formhaltigkeit aufweist. Die Erfindung beschränkt sich jedoch nicht auf ETFE, sondern erfasst jedwedes geeignete synthetische Polymer.

Gemäß der in den Fig. 1 und 2 gezeigten Ausgestaltungsvariante der Erfindung ist die Armierung 3.1 aus einer Verseillage zweier Gruppen über den Umfang des Rohrinnenteils 2 alternierend angeordneter Verseildrähte unterschiedlichen Querschnitts mit zueinander formkomplementär ausgebildeten Kontaktflächen 8, 9 aufgebaut. Die Verseildrähte beider Gruppen weisen jeweils einen Profilquerschnitt auf, der auf die Grundgeometrie eines Sektorprofils eines Kreisringes zurückgeführt ist. Eine der beiden Gruppen Verseildrähte ist durch erste Profildrähte 10 gebildet, welche ersten Profildrähte 10 beidseitig des Sektorprofils im Bereich ihrer Kontaktflächen 8 jeweils wenigstens einen sich längs des Profildrahtes 10 erstreckenden Längssteg 11 aufweisen. Die Erfindung beschränkt sich jedoch nicht auf einen Längssteg 11 je Kontaktfläche 8, sondern erfasst auch zwei oder mehr in radialer Richtung des Rohres 1 des "Coiled-Tubing"-Typs gesehen übereinander angeordnete Längsstege 11 zumindest im Bereich einer der besagten Kontaktflächen 8 (nicht zeichnerisch dargestellt).

Die andere Gruppe Verseildrähte ist durch zweite Profildrähte 12 gebildet, welche zweiten Profildrähte 12 im Bereich ihrer Kontaktflächen 9 jeweils zu besagten Längsstegen 11 der unmittelbar benachbarten ersten Profildrähte 10 korrespondierende und je einen Längssteg 11 formschlüssig aufnehmende Längsnuten 13 aufweisen. Durch diese Maßnahme ist ein besonders wirkungsvoller Formschluss zwischen den ersten und zweiten Profildrähten 10, 12 der Armierung 3,1 bewirkt.

Gemäß den Fig. 1, 2 und 3a weisen die Längsstege 11 und die hierzu formkomplementär ausgebildeten Längsnute 13 einen rechteckigen oder quadratischen Querschnitt auf. Die nach radial innen und nach radial außen weisenden Flächen der Längsstege 11 erstrecken sich bevorzugt auf einer Normalen zum Radius des Rohres 1 des "Coiled-Tubing"-Typs. Hieraus resultiert ein hoher Widerstand der Profildrähte 10, 12 gegen radiales Auflösen des Verbundes der Armierung 3.1.

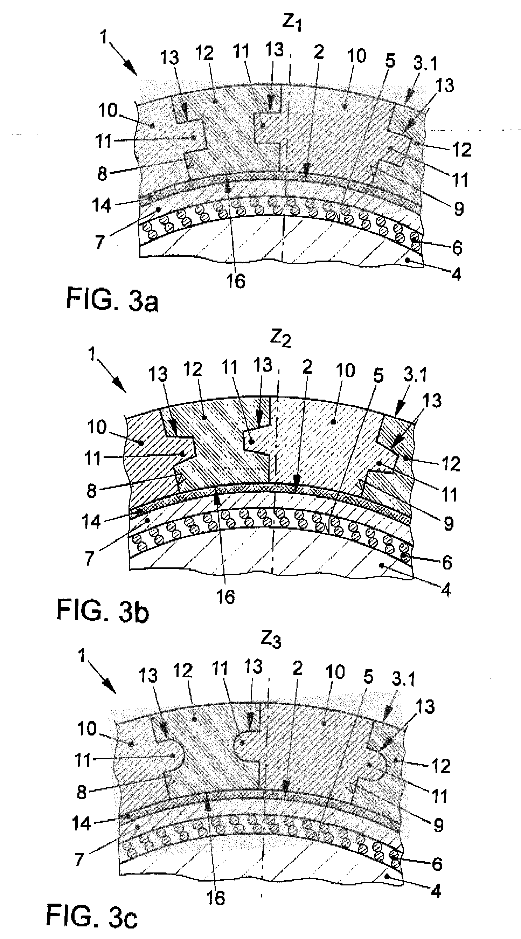

Um die Herstellung der Armierung 3.1, insbesondere das Verseilen der ersten und zweiten Profildrähte 10, 12 mit Formschluss derselben untereinander zu erleichtern, ist vorgesehen, dass die Längsstege 11 der ersten Profildrähte 10 im Querschnitt eines jeden ersten Profildrahtes 10 gesehen zu ihrem freien Ende hin sich verjüngend ausgebildet sind. Durch diese Maßnahme können während der Herstellung der Armierung 3.1 die Längsstege 11 leicht in die jeweils zugeordnete, formkomplemetär ausgebildete Längsnut 13 eingeführt werden. Die Längsstege 11 sind dabei im Querschnitt gesehen bevorzugt trapezförmig (Fig. 3b) oder konvex gerundet (Fig. 3c) ausgebildet. Denkbar ist es ebenfalls und demgemäß durch die Erfindung mit erfasst, einen spitz zulaufenden Querschnitt der Längsstege 11 vorzusehen (nicht zeichnerisch dargestellt).

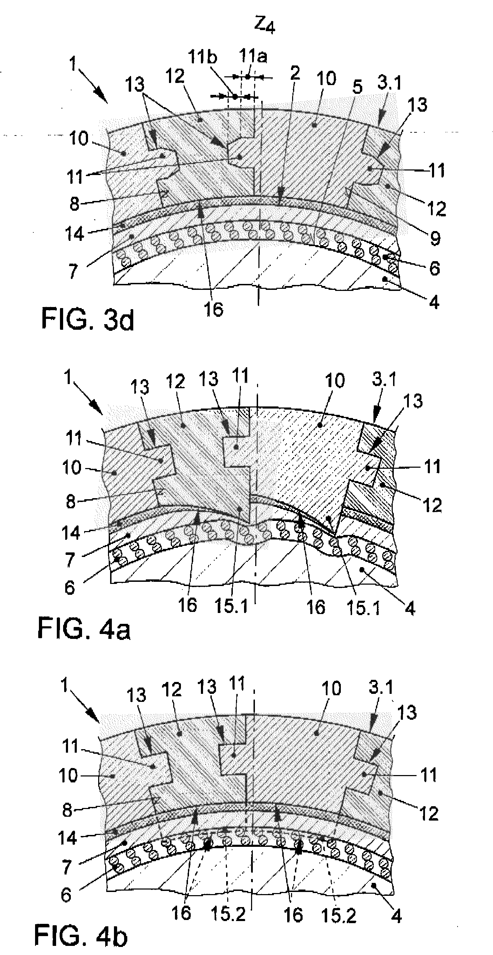

Ein wirkungsgleicher, zumindest jedoch wirkungsähnlicher Effekt ist erzielbar, wenn zumindest die freien Enden der Längsstege 11 im Querschnitt gesehen trapezförmig (vgl. Fig. 3d) oder konvex gerundet oder spitz zulaufend, ausgebildet sind (nicht zeichnerisch dargestellt). Diese Maßnahme hat den Vorteil, dass bei Gewährleistung eines hohen Widerstandes der Profildrähte 10, 12 gegen radiales Auflösen des Verbundes der Armierung 3.1 das Fügen der Profildrähte 10, 12 untereinander ebenfalls vereinfacht ist. Dabei ist je Längssteg 11 ein erster, profilseitiger Abschnitt 11 a desselben mit nach radial innen und nach radial außen weisenden Flächen vorgesehen, die bevorzugt auf einer Normalen zum Radius des Rohres 1 des "Coiled-Tubing"-Typs liegen. Zumindest einer der besagten ersten Abschnitte 11a geht in einen zweiten, freien End-Abschnitt 11b über, der geneigt ausgebildet ist derart, dass sich der Querschnitt des Längssteges 11 in diesem End-Abschnitt 11b verjüngt.

In Fortbildung der Erfindung kann darüber hinaus durch eine bestimmte Auslegung der Längsstege 11 im Verhältnis zu den dieselben formschlüssig aufnehmenden Längsnuten 13 eine Übermaßpassung (Presspassung) bewirkt werden, wodurch vorteilhaft der Formschluss mit einem Kraftschluss kombiniert ist (nicht zeichnerisch dargestellt). Hierdurch werden die Festigkeit des Verbundes der Armierung 3.1 sowie die Fluiddichtigkeit des Rohres 1 des "Coiled-Tubing"-Typs noch weiter erhöht.

Um eine axiale Relativbewegung zwischen dem Rohrinnenteil 2 und der Armierung 3.1 während des bestimmungsgemäßen Gebrauchs des Rohres 1 des "Coiled-Tubing"-Typs, insbesondere zu geophysikalischen Mess-, Erkundungs- und Fluidführungszwecken in langen Bohrlöchern, wirkungsvoll zu verhindern, ist das Rohrinnenteil 2 mit der Armierung 3.1 durch Stoff-, Form- und/oder Kraftschluss axial fest verbunden.

Gemäß den Fig. 1 und 2 wird der besagte Stoffschluss bevorzugt mittels eines Klebstoffes 14 bewirkt, der seinerseits auf das Rohrinnenteil 2 aufgebracht wird und nach dem Ummanteln des Rohrinnenteils 2 mit der Armierung 3.1 respektive dem Aufseilen der Verseildrähte bzw. der Profildrähte 10, 12 auf das Rohrinnenteil 2 abbindet bzw. aushärtet. Dabei fungiert der Klebstoff 14 in vorteilhafter Weise gleichzeitig als Abdichtmittel, indem es etwaige noch vorhandene Hohlräume zwischen den Profildrähten 10, 12 der Armierung 3.1 des Rohres 1 des "Coiled-Tubing"-Typs und zwischen den Profildrähten 10, 12 und dem Rohrinnenteil 2 ausfüllt, wodurch eine besonders hohe Fluiddichtheit des Rohres 1 des "Coiled-Tubing"-Typs gewährleistet ist. Der Klebstoff 14 besteht bevorzugt aus einem geeigneten synthetischen Polymer.

Was den besagten Form- und/oder Kraftschluss zwischen der Armierung 3.1 und dem Rohrinnenteil 2 anbelangt, ist dieser mittels wenigstens einer Erhebung 15.1, 15.2 an einer zum Rohrinnenteil 2 weisenden Kontaktfläche 16 zumindest eines Profildrahtes 10, 12 bewirkt. Die wenigstens eine Erhebung 15.1, 15.2 ist ausgehend von besagter Kontaktfläche 16 nach radial innen gerichtet, wodurch diese im Zuge des Verseilvorganges in die Oberfläche des Rohrinnenteils 2 formschlüssig eindringt, zumindest jedoch mit Kraftschluss gegen die Oberfläche des Rohrinnenteils 2 gepresst wird und so eine axiale Relativbewegung zwischen der Armierung 3.1 und dem Rohrinnenteil 2 verhindert, zumindest jedoch wirkungsvoll behindert.

Die Fig. 4a und 4b zeigen insoweit ergänzend zur stoffschlüssigen Fügeverbindung eine formschlüssige Fügeverbindung mittels Erhebungen 15.1 (Fig. 4a) bzw. 15.2 (Fig. 4b). Die Erhebungen 15.1, 15.2 können sowohl alternativ als in Kombination (nicht zeichnerisch dargestellt) Anwendung finden. Die Erhebung 15.1 erstreckt sich längs des betreffenden Profildrahtes 10, 12. Durch die erfolgte Verseilung schlingt sich die Erhebung 15.1 wendelförmig um das Rohrinnenteil 2 und dringt dabei in die Oberfläche desselben formschlüssig ein. Dadurch wird eine axiale Relativbewegung zwischen dem Profildraht 10, 12 und dem Rohrinnenteil 2 verhindern, zumindest jedoch wirkungsvoll behindern. Bevorzugt sind jedoch eine Mehrzahl der Profildrähte 10, 12, weiter bevorzugt sämtliche Profildrähte 10, 12 mit zumindest einer derartigen Erhebung 15.1 ausgestattet (nicht zeichnerisch dargestellt).

Demgegenüber erstreckt sich die Erhebung 15.2 (gestrichelt dargestellt) quer zur Längserstreckung des Profildrahtes 10, 12. Sind mehrere derartige Erhebungen 15.2 je Profildraht 10, 12 vorgesehen, ist beispielsweise eine Kontaktfläche 16 mit dem Rohrinnenteil 2 gebildet, welche nach Art einer Zahnstange zumindest abschnittsweise abwechselnd Erhebungen 15.2, sozusagen Zähne, sowie Zahn-Lücken aufweist. Die Zähne dringen formschlüssig in die Oberfläche des Rohrinnenteils 2 ein, wodurch ebenfalls eine axiale Relativbewegung zwischen dem Profildraht 10, 12 und dem Rohrinnenteil 2 verhindert, zumindest jedoch wirkungsvoll behindert ist/wird. Bevorzugt sind eine Mehrzahl der Profildrähte 10, 12, weiter bevorzugt sämtliche Profildrähte 10, 12 mit zumindest einer derartigen Erhebung 15.2 ausgestattet (nicht zeichnerisch dargestellt).

Wie bereits oben ausgeführt, bestehen die Profildrähte 10, 12 bevorzugt aus einem Stahl, der seinerseits geeignet ist, hohen und höchsten auf das Rohr 1 des "Coiled-Tubing"-Typs einwirkenden Kräften zu widerstehen, beispielsweise bei Verwendung desselben für geophysikalische Mess-, Erkundungs- und Fluidführungszwecke, insbesondere in der Erdöl- und Erdgasförderindustrie. Im Hinblick darauf wird besagte wenigstens eine Erhebung 15.1, 15.2 bevorzugt bereits bei der Herstellung des zumindest einen Profildrahtes 10, 12 nach einem Walzverfahren am betreffenden Profildraht 10, 12 ausgebildet. Zur Erzielung eines qualitätsgerechten Lagenaufbaus des die Armierung 3.1 ausbildenden Verseilverbandes sind die Profildrähte 10, 12 rückdrehungsfrei verseilt sowie spannnungsfrei in den Verseilverband gelegt, wobei die Profildrähte 10, 12 vermittels an sich bekannter Vorformungseinrichtungen vorab eine entsprechende Vorformung erfahren.

### Variante 2:

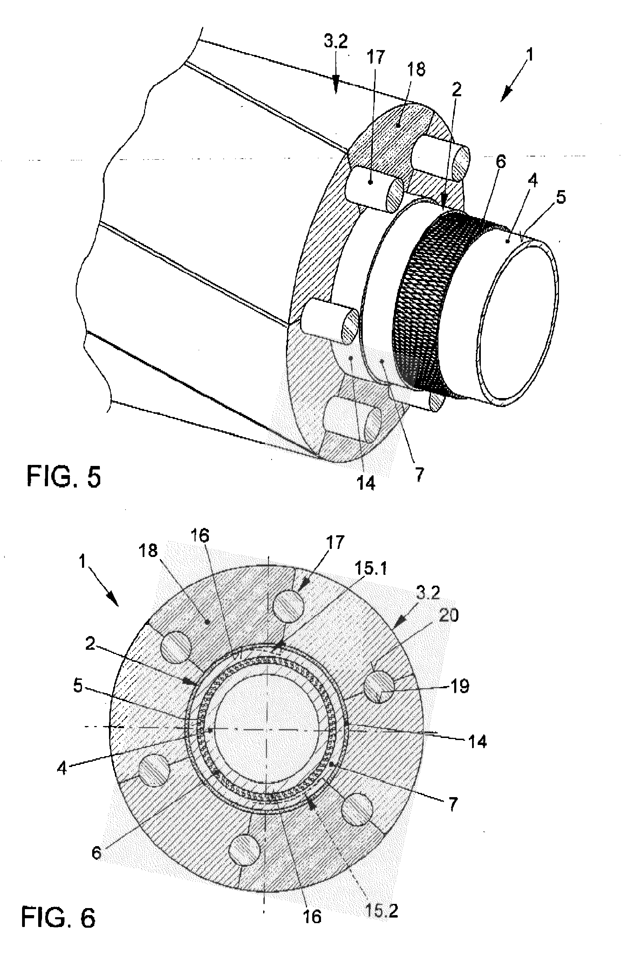

Die Fig. 5 und 6 zeigen eine zweite Ausführungsvariante des erfindungsgemäßen Rohres 1 des "Coiled-Tubing"-Typs, wobei funktionsgleiche Teile im Wesentlichen mit gleichen Bezugszeichen wie in den vorherigen Zeichnungsfiguren zur ersten Ausführungsvariante bezeichnet sind, so dass zu deren Erläuterung auf die vorstehende Beschreibung zur besagten ersten Ausführungsvariante verwiesen wird.

Diese zweite Ausführungsvariante des erfindungsgemäßen Rohres 1 des "Coiled-Tubing"-Typs unterscheidet zur vorbeschriebenen ersten Ausführungsvariante im Wesentlichen dahingehend, dass eine Armierung 3.2 vorgesehen ist, bei der eine Gruppe Verseildrähte durch Runddrähte 17 gebildet ist, wogegen die andere Gruppe Verseildrähte durch Profildrähte 18 gebildet ist. Die Profildrähte 18 weisen dabei einen bogenförmigen Profilquerschnitt auf, der auf die Grundgeometrie eines Sektorprofils eines Kreisringes zurückgeführt ist, so dass die Kontaktflächen 19 der Profildrähte 18 formkomplementär zu den Kontaktflächen 20 der benachbarten Runddrähte 17 konkav ausgebildet sind.

Die Rund- und Profildrähte 17, 18 bestehen bevorzugt aus einem Stahl, der seinerseits geeignet ist, hohen und höchsten auf das erfindungsgemäße Rohr 1 des "Coiled-Tubing"-Typs einwirkenden Kräften zu widerstehen, beispielsweise bei Verwendung desselben für geophysikalische Mess-, Erkundungs- und Fluidführungszwecke, insbesondere in der Erdöl- und Erdgasförderindustrie. Zur Erzielung eines qualitätsgerechten Lagenaufbaus des die Armierung 3.2 ausbildenden Verseilverbandes sind die Runddrähte 17 mit Rückdrehung und die Profildrähte 18 rückdrehungsfrei verseilt sowie spannnungsfrei in den Verseilverband gelegt, wobei die Profildrähte 18 vermittels an sich bekannter Vorformungseinrichtungen vorab eine entsprechende Vorformung erfahren.

Was den zur ersten Ausführungsvariante der Erfindung ausführlich beschriebenen Stoff-, Form- und/oder Kraftschluss zwischen dem Rohrinnteil 2 und der Armierung 3.1 anbelangt, kann ein derartiger Stoff-, Form- und/oder Kraftschluss selbstverständlich auch zwischen dem Rohrinnenteil 2 und der Armierung 3.2 vorgesehen werden und ist demgemäß durch die Erfindung mit erfasst.

Gemäß den Fig. 5 und 6 wird der besagte Stoffschluss bevorzugt mittels eines oben bereits erwähnten Klebstoffes 14 bewirkt, der seinerseits auf das Rohrinnteil 2 aufgebracht wird und nach dem Ummanteln des Rohrinnenteils 2 mit der Armierung 3.2 respektive dem Aufseilen der Verseildrähte bzw. der Rund- und Profildrähte 17, 18 auf das Rohrinnteil 2 abbindet bzw. aushärtet. Dabei fungiert der Klebstoff 14 in vorteilhafter Weise gleichzeitig als Abdichtmittel, indem es etwaige noch vorhandene Hohlräume zwischen den Rund- und Profildrähten 17, 18 der Armierung 3.2 und zwischen den Rund- und Profildrähten 17, 18 und dem Rohrinnenteil 2 ausfüllt. wodurch eine besonders hohe Fluiddichtheit des erfindungsgemäßen Rohres 1 des "Coiled-Tubing"-Typs gewährleistet ist.

Der Form- und/oder Kraftschluss zwischen der Armierung 3.2 und dem Rohrinnteil 2 ist mittels wenigstens einer Erhebung 15.1, 15.2 an der zum Rohrinnenteil 2 weisenden Kontaktfläche 16 zumindest eines Profildrahtes 18 bewirkt. Die wenigstens eine Erhebung 15.1, 15.2 ist ausgehend von besagter Kontaktfläche 16 nach radial innen gerichtet, wodurch diese im Zuge des Verseilvorganges in die Oberfläche des Rohrinnenteils 2 formschlüssig eindringt, zumindest jedoch gegen die Oberfläche des Rohrinnenteils 2 gepresst wird und so eine axiale Relativbewegung zwischen der Armierung 3.2 und dem Rohrinnenteil 2 verhindert, zumindest jedoch wirkungsvoll behindert.

Fig. 6 zeigt insoweit ergänzend zur stoffschlüssigen Fügeverbindung der Einfachheit halber innerhalb einer einzigen Zeichnungsfigur zwei Ausführungsformen einer formschlüssigen Fügeverbindung mittels Erhebungen 15.1, 15.2, die alternativ oder in Kombination Anwendung finden können (jeweils gestrichelte Linienführung). Die Erhebung 15.1 erstreckt sich längs des betreffenden Profildrahtes 18. Durch die erfolgte Verseilung schlingt sich die Erhebung 15.1 wendelförmig um das Rohrinnenteil 2 und dringt dabei in die Oberfläche desselben formschlüssig ein. Dadurch wird eine axiale Relativbewegung zwischen dem Profildraht 18 und dem Rohrinnenteil 2 verhindern, zumindest jedoch wirkungsvoll behindern. Bevorzugt sind jedoch eine Mehrzahl der Profildrähte 18, weiter bevorzugt sämtliche Profildrähte 18 mit zumindest einer derartigen Erhebung 15.1 ausgestattet (nicht zeichnerisch dargestellt).

Demgegenüber erstreckt sich die Erhebung 15.2 quer zur Längserstreckung des Profildrahtes 18. Sind mehrere derartige Erhebungen 15.2 je Profildraht 18 vorgesehen, ist beispielsweise eine Kontaktfläche 16 mit dem Rohrinnenteil 2 gebildet, welche nach Art einer Zahnstange zumindest abschnittsweise abwechselnd Erhebungen 15.1, sozusagen Zähne, sowie Zahn-Lücken aufweist. Die Zähne dringen formschlüssig in die Oberfläche des Rohrinnenteils 2 ein, wodurch ebenfalls eine axiale Relativbewegung zwischen dem Profildraht 18 und dem Rohrinnenteil 2 verhindert, zumindest jedoch wirkungsvoll behindert ist/wird. Bevorzugt sind eine Mehrzahl der Profildrähte 18, weiter bevorzugt sämtliche Profildrähte 18 mit zumindest einer derartigen Erhebung 15.2 ausgestattet (nicht zeichnerisch dargestellt).

Die vorstehenden Ausführungsbeispiele stellen auf ein Rohr 1 des "Coiled-Tubing"-Typs mit einem Rohrinnenteil 2 und einer das Rohrinnenteil 2 ummantelnden Armierung 3.1 bzw. 3.2 ab, welche Armierung 3.1 bzw. 3.2 "lediglich" durch eine Verseillage der oben beschriebenen Art gebildet ist. Die Erfindung beschränkt sich jedoch nicht auf diese Ausführungsbeispiele, sondern erfasst auch ein Rohr 1 des "Coiled-Tubing"-Typs mit einer Armierung 3.1 bzw. 3.2, die ihrerseits durch eine Mehrzahl von Lagen der beschriebenen Art gebildet ist (nicht zeichnerisch dargestellt). Die vorstehend beschriebenen Verseillagen können dabei beliebig kombiniert werden.

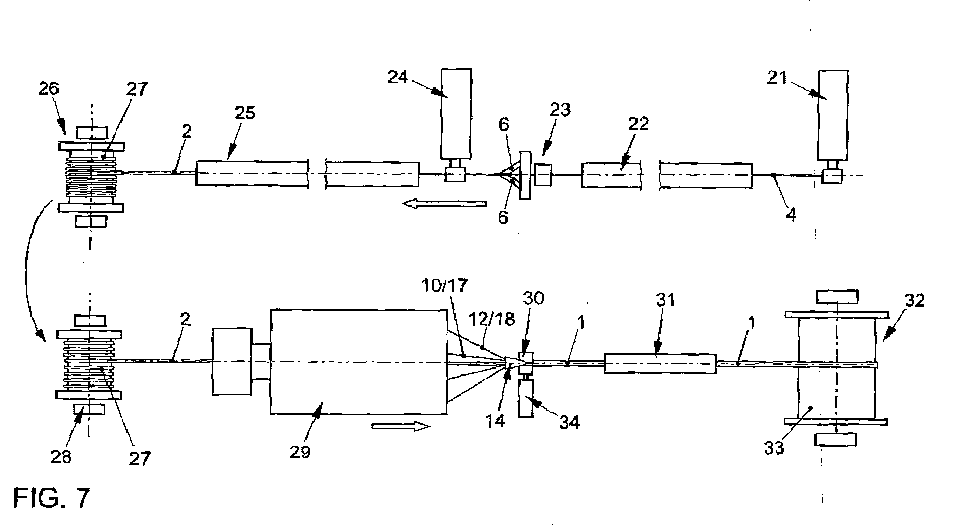

Nachfolgend wird die Erfindung weiter anhand einer in Fig. 7 dargestellten, bevorzugten Fertigungsanlage zur Herstellung eines erfindungsgemäßen Rohres 1 des "Coiled-Tubing"-Typs beschrieben. Das Herstellungsverfahren ist vorliegend diskontinuierlich. Sicherlich ist auch eine kontinuierliche Verfahrensführung denkbar und demgemäß durch die Erfindung mit erfasst. Im Wesentlichen weist die Anlage zur Herstellung des erfindungsgemäßen Rohres 1 des "Coiled-Tubing"-Typs zwei separate Fertigungslinien mit einzelnen Vorrichtungen wie folgt auf:

Erste Fertigungslinie:
- Einen ersten Extruder 21, vermittels dessen ein Rohr 4 aus einem extrudierfähigen Isoliermaterial, insbesondere einem synthetischen Polymer, bevorzugt ETFE (ETFE - Ethylen-Tetrafluorethylen), zur Ausbildung eines Rohrinnenteils 2 hergestellt wird.
- Eine erste Kühlstrecke 22, vermittels derer das Rohr 4 aus extrudierfähigem Isoliermaterial einer Kühlung und somit Härtung unterzogen wird;
- Eine Flechtmaschine 23, vermittels derer auf das besagte Rohr 4 wenigstens ein elektrischer Leiter 4 und/oder Signalleiters auf die Außenmantelfläche 5 des Rohres 4 des Rohrinnenteils 2 aufgebracht respektive aufgeflochten wird. Der wenigstens eine elektrische Leiter 4 und/oder Signalleiter ist gemäß diesem Ausführungsbeispiel durch ein bandförmiges Metallnetz und/oder durch eine bandförmige Metallfolie und/oder durch ein langgestrecktes, metallenes Drahtelement gebildet. Das Metallnetz oder die Metallfolie oder das langgestreckte, metallenen Drahtelement bestehen dabei bevorzugt aus einem Kupfer oder einer Kupferlegierung;
- Einen zweiten Extruder 24, vermittels dessen auf das Rohr 4 samt dem wenigstens einen elektrischen Leiter 4 und/oder Signalleiter ein Mantel 7 aus einem extrudierfähigen Isoliermaterial aufgebracht wird, wobei das Isoliermaterial aus einem synthetischen Polymer, insbesondere einem synthetischen Polymer, bevorzugt ETFE (ETFE = Ethylen-Tetrafluorethylen), besteht;
- Eine zweite Kühlstrecke 25, vermittels derer der Mantel 7 aus extrudierfähigem Isoliermaterial einer Kühlung und somit Härtung unterzogen wird;
- Einen Aufwickler 26 mit einer Wickelspule 27 für das fertige Rohrinnenteil 2.

Im Anschluss daran wird die mit dem fertigen Rohrinnenteil 2 bewickelte Wickelspule 27 beispielsweise mittels eines nicht zeichnerisch dargestellten Kranes in einen Ablauf 28 der zweiten Ferkigungslinie eingesetzt.

Diese zweite Fertigungslinie weist einzelne Vorrichtungen wie folgt auf:
- Zunächst den besagten Ablauf 28 mit der nunmehr als Ablaufspule fungierenden Wickelspule 27;
- Eine Verseilmaschine 29, insbesondere Korb-Verseilmaschine 29 mit wenigstens einem Verseilkorb, der mehrere, nicht zeichnerisch dargestellte Ablaufspulen für die Verseildrähte trägt. Vermittels der Verseilmaschine 29 wird in einem Verseilpunkt 30 eine Armierung 3.1 bzw. 3.2 aus zumindest einer Lage Verseildrähte auf das gebildete Rohrinnenteil 2 aufgebracht;
- Einen Abzug 31, vorliegend einen Raupenabzug, der das Rohrinnenteil 2 und letztendlich das fertige Rohr 1 des "Coiled-Tubing"-Typs kontinuierlich durch die zweite Fertigungslinie zieht; und
- einen Aufwickler 32 mit einer Aufwickelspule 33 für das fertige Rohr 1 des "Coiled-Tubing"-Typs,

Um eine axiale Relativbewegung zwischen dem Rohrinnenteil 2 und der Armierung 3.1 bzw. 3.2 während des bestimmungsgemäßen Gebrauchs des Rohres 1 des "Coiled-Tubing"-Typs, insbesondere zu geophysikalischen Mess-, Erkundungs- und Fluidführungszwecken in langen Bohrlöchern, wirkungsvoll zu verhindern, ist im Bereich des Verseilpunktes 30 eine Vorrichtung zur Aufbringung eines Klebstoffes 14 auf das Rohrinnteil 2 angeordnet. Vorliegend findet dazu ein dritter Extruder 34 Anwendung. Im Wesentlichen werden dabei die Verseildrähte, nämlich erste und zweite Profildrähte 10, 12 bzw. Runddrähte 17 und Profildrähte 18 in einen mit Klebstoff 14 gefüllten Spritzkopf des dritten Extruders 34 hinein geführt und innerhalb desselben auf das Rohrinnenteil 2 zur Ausbildung der Armierung 3.1 bzw. 3.2 aufgebracht. Der Verseilpunkt 30 ist dabei sozusagen im Spritzkopf des dritten Extruders 34 angeordnet.

Demgegenüber oder in Kombination mit vorstehender Maßnahme kann zwischen der Armierung 3.1, 3.2, insbesondere deren Profildrähten 10, 12; 18, und dem Rohrinnenteil 2 ein Form- und/oder Kraftschluss bewirkt werden, indem an einer zum Rohrinnenteil 2 weisenden Kontaktfläche 16 besagter Profildrähte 10, 12; 18 mit dem Rohrinnenteil 2 wenigstens eine nach radial innen gerichtete Erhebung 15.1, 15.2 ausgebildet ist, welche Erhebung 15.1, 15.2 während des Verseilvorganges im Verseilpunkt 30 in die Oberfläche des Rohrinnenteils 2 formschlüssig eindringt, zumindest jedoch gegen die Oberfläche des Rohrinnenteils 2 gepresst wird (vgl. hierzu insbes. Fig. 4a, 4b; 6).

**Bezugszeichenliste**

| | | | |
|---|---|---|---|
| 1 | Rohr des "Coiled-Tubing"-Typs | 15.2 | Erhebung |
| 2 | Rohrinnenteil | 16 | Kontaktfläche |
| 3.1 | Armierung | 17 | Runddraht |
| 3.2 | Armierung | 18 | Profildraht |
| 4 | Rohr | 19 | Kontaktfläche(Profildraht18) |
| 5 | Außenmantelfläche (Rohr 4) | 20 | Kontaktfläche (Runddraht 17) |
| 6 | Leiter | 21 | erster Extruder |
| 7 | Mantel | 22 | erste Kühlstrecke |
| 8 | Kontaktfläche (erster Profildraht 10) | 23 | Flechtmaschine |
| | | 24 | zweiter Extruder |
| 9 | Kontaktfläche (zweiter Profildraht 12) | 25 | zweite Kühlstrecke |
| | | 26 | Aufwickler |
| 10 | erster Profildraht | 27 | Wickelspule |
| 11 | Längssteg | 28 | Ablauf |
| 11a | erster Abschnitt | 29 | Verseilmaschine |
| 11b | zweiter Abschnitt | 30 | Verseilpunkt |
| 12 | zweiter Profildraht | 31 | Abzug |
| 13 | Längsnut | 32 | Aufwickler |
| 14 | Klebstoff | 33 | Aufwickelspule |
| 15.1 | Erhebung | 34 | dritter Extruder |

## Patentansprüche

1. Flexibles Rohr (1) des "Coiled-Tubing"-Typs, mit einem Rohrinnenteil (2) und einem Rohraußenteil in Form einer das Rohrinnenteil (2) ummantelnden Armierung (3.1, 3.2), wobei die Armierung (3.1, 3.2) aus zumindest einer Verseillage zweier Gruppen über den Umfang des Rohrinnenteils (2) alternierend angeordneter Verseildrähte unterschiedlichen Querschnitts mit zueinander formkomplementär ausgebildeten Kontaktflächen (8, 9; 19, 20) aufgebaut ist, wobei das Rohrinnenteil (2) ein radial innenliegendes Rohr (4) und wenigstens einen auf die Außenmantelfläche (5) besagten Rohres (4) aufgebrachten elektrischen Leiter (6) und/oder Signalleiter sowie einen das Rohr (4) samt des wenigstens einen elektrischen Leiters (6) und/oder Signalleiters abdeckenden Mantel (7) aufweist, und wobei das Rohrinnenteil (2) mit der Armierung (3.1, 3.2) durch Stoff-, Form- und/oder Kraftschluss axial fest verbunden ist.

2. Flexibles Rohr (1) nach Anspruch 1, **dadurch gekennzeichnet, dass** das Rohr (4) des Rohrinnenteils (2) und der Mantel (7) jeweils aus einem synthetischen Polymer gebildet sind.

3. Flexibles Rohr (1) nach Anspruch 1 oder 2, **dadurch gekennzeichnet, dass** der wenigstens eine elektrische Leiter (6) oder Signalleiter durch ein bandförmiges oder schlauchförmiges Metallnetz oder durch eine bandförmige oder schlauchförmige Metallfolie oder durch ein langgestrecktes, metallenes Drahtelement gebildet ist.

4. Flexibles Rohr (1) nach einem der Ansprüche 1 bis 3, **dadurch gekennzeichnet, dass** die Verseildrähte beider Gruppen jeweils einen bogenförmigen Profilquerschnitt aufweisen, der auf die Grundgeometrie eines Sektorprofils eines Kreisringes zurückgeführt ist, wobei die eine Gruppe Verseildrähte durch erste Profildrähte (10) gebildet ist, welche ersten Profildrähte (10) beidseitig des Sektorprofils im Bereich ihrer Kontaktfläche (8) jeweils wenigstens einen sich längs des Profildrahtes (10) erstreckenden Längssteg (11) aufweisen, wogegen die andere Gruppe Verseildrähten durch zweite Profildrähte (12) gebildet ist, welche zweiten Profildrähte (12) im Bereich ihrer Kontaktflächen (9) jeweils zu besagten Längsstegen (11) der unmittelbar benachbarten ersten Profildrähte (10) korrespondierende und je einen Längssteg (11) formschlüssig aufnehmende Längsnuten (13) aufweisen.

5. Flexibles Rohr (1) nach einem der Ansprüche 1 bis 3, **dadurch gekennzeichnet, dass** eine Gruppe Verseildrähte durch Runddrähte (17) gebildet ist, wogegen die andere Gruppe Verseildrähte durch Profildrähte (18) gebildet ist, welche Profildrähte (15) einen bogenförmigen Profilquerschnitt aufweisen, der auf die Grundgeometrie eines Sektorprofils eines Kreisringes zurückgeführt ist, und wobei die Kontaktflächen (19) der Profildrähte (18) formkomplementär zu den Kontaktflächen (20) der benachbarten Runddrähte (17) konkav ausgebildet sind.

6. Flexibles Rohr (1) nach Anspruch 4 oder 5, **dadurch gekennzeichnet, dass** die Runddrähte (17) und Profildrähten (10, 12; 18) der zumindest einen Verseillage jeweils aus einem Stahl bestehen.

7. Flexibles Rohr (1) nach einem der Ansprüche 4 bis 6, **dadurch gekennzeichnet, dass** die Runddrähte (17) mit Rückdrehung und die Profildrähte (10, 12; 18) rückdrehungsfrei verseilt sind.

8. Flexibles Rohr (1) nach einem der Ansprüche 4 bis 7, **dadurch gekennzeichnet, dass** die Profildrähte (10, 12; 18) eine Vorformung erfahrend, spannungsfrei in den Verseilverband gelegt sind.

9. Flexibles Rohr (1) nach einem der Ansprüche 4 bis 8, **dadurch gekennzeichnet, dass** der Stoffschluss mittels eines Klebstoffes (14) bewirkt ist.

10. Flexibles Rohr (1) nach einem der Ansprüche 4 bis 9, **dadurch gekennzeichnet, dass** der Form- und/oder Kraftschluss mittels wenigstens einer Erhebung (15.1, 15.2) bewirkt ist, welche Erhebung (15.1, 15.2) an der zum Rohrinnenteil (2) weisenden Kontaktfläche (16) zumindest eines Profildrahtes (10, 12; 18) ausgebildet ist und nach radial innen gerichtet in die Oberfläche des Rohrinnenteils (2) formschlüssig eindringt, zumindest jedoch gegen die Oberfläche des Rohrinnenteils (2) gepresst wird/ist.

11. Flexibles Rohr (1) nach Anspruch 10, **dadurch gekennzeichnet, dass** die wenigstens eine Erhebung (15.1, 15.2) sich längs des Profildrahtes (10, 12; 18) oder quer zur Längserstreckung des Profildrahtes (10, 12; 18) erstreckt.

12. Verwendung eines flexiblen Rohres (1) nach einem der Ansprüche 1 bis 11 für geophysikalische Mess-, Erkundungs- und/oder Fluidführungszwecke, insbesondere in der Erdöl- und Erdgasförderindustrie.

13. Verfahren zur Herstellung eines flexiblen Rohres (1) nach einem der Ansprüche 1 bis 11, **gekennzeichnet durch** folgende Schritte:
a) Bereitstellung zumindest eines langgestreckten Rohres (4) aus einem synthetischen Polymer zur Ausbildung eines Rohrinnenteils (2),
b) Aufbringen wenigstens eines elektrischen Leiters (4) und/oder Signalleiters auf die Außenmantelfläche (5) des Rohres (4) des Rohrinnenteils (2), wobei der wenigstens eine elektrische Leiter (4) und/oder Signalleiter **durch** ein bandförmiges oder schlauchförmiges Metallnetz und/oder **durch** eine bandförmige oder schlauchförmige Metallfolie und/oder **durch** ein langgestrecktes, metallenes Drahtelement gebildet ist,
c) Abdecken des Rohres (4) des Rohrinnenteils (2) samt des wenigstens einen elektrischen Leiters (4) und/oder Signalleiters mit einem Mantel (7) aus einem extrudierfahigen Isoliermaterial mittels wenigstens eines Extruders (24), wobei das Isoliermaterial aus einem synthetischen Polymer besteht,
d) Überführung des gebildeten Rohrinnenteils (2) in einen Verseilpunkt (30) einer Verseilmaschine (29), und
e) im besagten Verseilpunkt (30) Aufbringung einer Armierung (3.1, 3.2) aus zumindest einer Verseillage zweier Gruppen über den Umfang des Rohrinnenteils (2) alternierend angeordneter Verseildrähte unterschiedlichen Querschnitts auf das Rohrinnenteil (2).

14. Verfahren nach Anspruch 13, **dadurch gekennzeichnet, dass** zwischen dem Schritt c) und dem Schritt d) ein Schritt ca) vorgesehen ist, der sich dadurch auszeichnet, dass auf den Mantel (7) wenigstens ein weiterer elektrischer Leiter (4) und/oder Signalleiter aufgebracht wird, wobei der wenigstens eine weitere elektrische Leiter (4) und/oder Signalleiter durch ein bandförmiges oder schlauchförmiges Metallnetz und/oder durch eine bandförmige oder schlauchförmige Metallfolie und/oder durch ein langgestrecktes, metallenes Drahtelement gebildet ist.

15. Verfahren nach Anspruch 13 oder 14, **dadurch gekennzeichnet, dass** zwischen dem Schritt d) und dem Schritt e) ein Schritt da) vorgesehen ist, der sich dadurch auszeichnet, dass vor Aufbringung der Armierung (3.1, 3.2) auf das Rohrinnenteil (2) im besagten Verseilpunkt (30) die Oberfläche des Rohrinnenteil (2) derart mit einem Klebstoff (14) benetzt wird, dass nach Aufbringung der Armierung (3.1, 3,2) nach Schritt e) etwaige zu verzeichnende Hohlräume sowohl zwischen den die Armierung (3.1, 3.2) bildenden Verseildrähten als auch zwischen der besagten Armierung (3.1, 3.2) und dem Rohrinnenteil (2) vom Klebstoff (14) eingenommen sind, und/oder dass,
- im Hinblick auf den Schritt e) zwischen der Armierung (3.1, 3.2) und dem Rohrinnenteil (2) ein Formschluss bewirkt wird, indem an einer zum Rohrinnenteil (2) weisenden Kontaktfläche (16) mit dem Rohrinnenteil (2) zumindest eines als Profildraht (10, 12; 18) ausgebildeten Verseildrahtes wenigstens eine nach radial innen gerichtete Erhebung (15.1, 15.2) ausgebildet ist, welche Erhebung (15.1, 15.2) in die Oberfläche des Rohrinnenteils (2) formschlüssig eindringt, zumindest jedoch gegen die Oberfläche des Rohrinnenteils (2) gepresst wird.
